# EUROPEAN PATENT SPECIFICATION

(11) **EP 2 907 758 B1**
(45) Date of publication and mention of the grant of the patent: **01.05.2019**
(21) Application number: 14000538.0
(22) Date of filing: 14.02.2014
(51) Int. Cl.: B64G 1/64, F16D 13/30, B64G 1/22

(54) **Device for coupling a satellite payload to a drive unit**
Vorrichtung zur Kopplung einer Satellitennutzlast an eine Antriebseinheit
Dispositif pour coupler une charge utile de satellite à une unité d'entraînement

(43) Date of publication of application: 19.08.2015
(73) Proprietor: Airbus Defence and Space GmbH, 82024 Taufkirchen (DE)
(72) Inventor: Schmid, Manfred, 88090 Immenstaad (DE)
(74) Representative: Schicker, Silvia

(56) References cited:
- EP-A2- 2 634 095
- US-A- 4 108 424
- US-A1- 2009 159 377

## Description

The invention relates to a device for coupling a satellite payload to a drive unit for actuating the satellite payload in orbit.

Satellite payloads, such as energy harvesting systems (e.g. solar cells), antennas or the like, are actuated by a drive unit during operation in orbit. The drive unit may be, for example, a motor which is capable of rotating the payload around a rotating axis of the drive unit. The payloads can have a considerable weight which involves the problem that, during launch of a space craft, the drive unit may suffer from vibrations introduced by the heavy payload.

EP 2 634 095 A2 discloses a launch lock assembly for a spacecraft isolation system with a first and a second mount piece. A releasable clamp device normally maintains the first and the second mount piece in clamped engagement and, when actuated, releases the first and the second mount piece form clamped engagement to allow relative axial motion therebetween.

From US 4,108,424 A a caging device is known for releasibly clutching two relatively rotatable members to one another, such as a rotatable shaft to a fixed support or two independently rotatable shafts to one another, by axial movement of a clutch member having a conically tapered clutch surface to and from a position of simultaneous engagement of its clutch surface with coaxial conically tapered clutch surfaces on the relatively rotatable members.

It is an object of the present invention to provide a device which is capable of avoiding influences from a satellite payload to a drive unit during launch of a spacecraft which aims to bring them to orbit.

This object is solved by a device according to the features of claim 1. Preferred embodiments are set out in the dependent claims.

According to the invention a device for coupling a satellite payload to a drive unit for actuating for satellite payload in orbit is provided. The device comprises a drive unit interface, a payload interface and a coupling member. The drive unit interface is connectable to the drive unit and has a first transmission surface.

The payload interface is connectable to the payload and has a second transmission surface. The coupling member is adapted for decoupling the drive unit interface from the payload interface by lifting the first transmission surface from the second transmission surface so that they cannot interact with each other during launch of the satellite payload. Furthermore, the coupling member is adapted for coupling the drive unit interface to the payload interface by engaging the first transmission surface with a second transmission surface after launch.

According to the invention, it is suggested to decouple the satellite payload from the drive unit during launch in order to avoid damages to the drive unit. Before operation during a mission in orbit, a coupling between these two components can be re-established in order to allow torque transfer from the drive unit to the satellite payload.

As a result, load transfer from the payload to the drive unit during launch can be avoided. The payload interface is lifted from the drive unit interface during launch for decoupling torque transferring components. After launch, in particular when broad to orbit, after engagement of the payload interface to the drive unit interface is provided torque transfer from the drive unit to the payload is possible. Damage of the drive unit due to vibrations because of the heavy weight of the payload during launch can be avoided.

According to a preferred embodiment, the drive unit interface comprises a cup member having a conical shape that provides a first transmission surface on its outer side. The payload device may comprise a cone being arranged coaxially to the cup member of the drive unit with regard to a longitudinal axis of the device wherein its inner surface provides the second transmission surface. Thus, a cup/cone interface is provided which provides lateral (i.e. in the plane perpendicular to the longitudinal axis) and bending load transfer from the drive unit interface to the payload interface. The cup/cone interface, i.e. the connection between the drive unit and the payload, can be realized with high precision due to the conical interface. During launch of the space craft carrying the payload, the payload is lifted out of the conical interface and is fixed in this position, for example, by a hold-down mechanism. Prior to mission, the hold-down mechanism can be opened. The payload interface is pulled against the drive unit interface and the conical interface, respectively. Then, torque transfer is possible.

According to the invention, the coupling member comprises a bellows that is connected to the drive unit interface and the payload interface. The bellows may have a circular shape. The bellows may be made from a metal. It may provide a spring force when pushed together to elongate its shape. The drive unit interface and the payload interface may have a circular shape as well.

The bellows may be arranged coaxially to the cup member of the drive unit and the cone of the payload interface with regard to the longitudinal axis of the device.

The bellows may be adapted to provide a spring force in the direction of the longitudinal axis if released by the coupling member for pressing the device unit interface, i.e. the first transmission interface, against the payload interface, i.e. the second transmission interface. Due to a spring characteristics of the bellows, there is a constant compression load in the cup/cone interface.

The bellows may be flexible in axial direction and/or in lateral direction and/or in bending direction. The bellows may be torsional stiff to allow torque transfer from the drive unit to the payload unit.

According to a further preferred embodiment, during launch, the bellows is compressed by a decoupling mechanism. Prior to a mission, during launch, the hold-down mechanism is opened and the payload is pulled via the bellows which provides a spring force trying to expand the bellows, back into the cup/cone interface. Now, torque transfer is possible through the bellows which is torsional stiff. The conical interface assures highly accurate aligning between the drive module rotation axis and the payload rotation axis, which both correspond to the longitudinal axis as mentioned above.

The device according to the invention avoids parasitic loads introduced into the drive unit mechanism by the payload during launch. The construction of the device is simple. In particular, it can be realized as a passive design having no actuators and no power consumption. Furthermore, the device is high reliable.

The invention will be explained in more detail by reference to the accompanying figures.
Fig. 1 shows a perspective cross sectional view of a device for coupling a satellite payload to a drive unit according to the invention where a coupling between the drive unit and the payload for torque transfer is provided.
Fig. 2 shows the perspective cross sectional view of the device of Fig.1 in a configuration where no coupling between the drive unit and the payload takes place.
Fig. 3 shows a different perspective cross sectional view of the device for coupling a satellite payload to a drive unit according to the invention where the drive unit is attached to a rotor of the drive unit.
Fig. 4 shows the perspective cross sectional view of the device of Fig. 3 in a configuration where no coupling between the drive unit and the payload takes place.

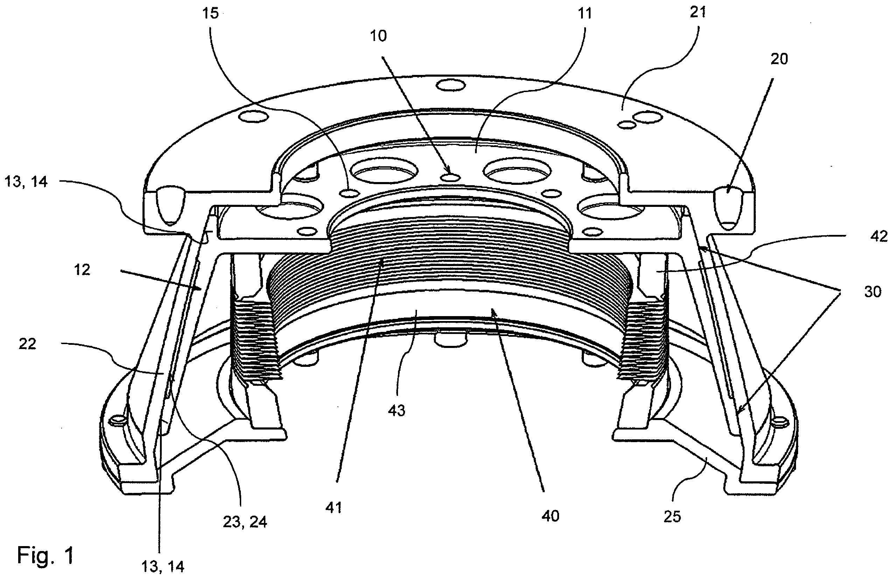

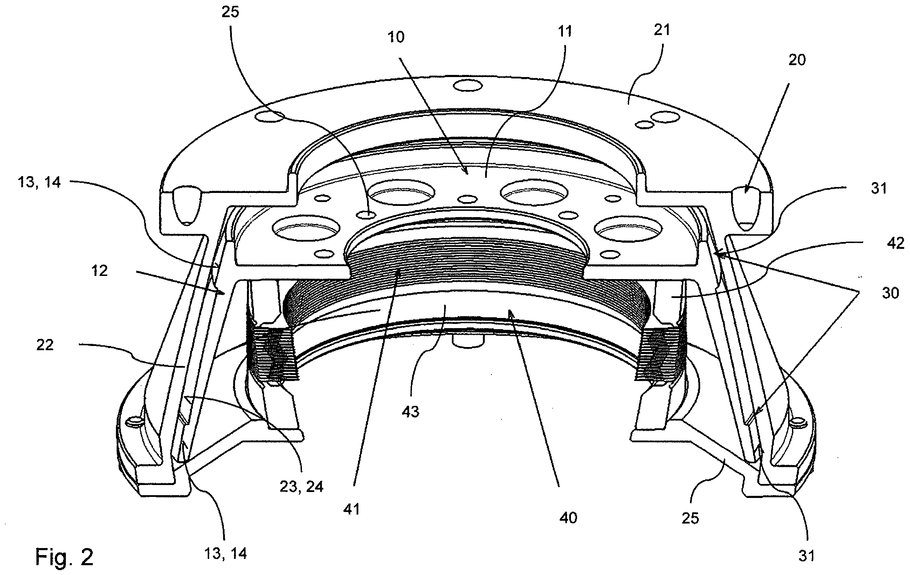

Figs. 1 and 2 show a perspective cross sectional view of a device for coupling and decoupling a satellite payload to and from a drive unit for actuating the satellite payload in orbit in a first and a second configuration. In the first configuration, illustrated in Fig. 1, a torque transfer from the not shown drive unit to the not shown satellite payload is possible. In contrast, in the second configuration, illustrated in Fig. 2, no torque transfer from the drive unit to the satellite payload, and vice versa, is possible.

The device comprises a drive unit interface 10 which is connected to the drive unit. The drive unit interface 10 comprises a circular member 11 having the shape of a ring and lying in a plane perpendicular to a longitudinal axis of the coupling and decoupling device. The circular member 11 is connected to a cup member 12 having a conical shape that provides a first transmission surface 13 on its outer side. The circular member 11 and the cup member 12 may be made from one single piece of material. The circular member 11 and the cup member 12 may be made from metal, for example.

In addition, the device comprises a payload interface 20. The payload interface 20 is connected to the not shown payload, for example an antenna or a solar cell. The payload interface 20 comprises a mounting ring 21 which is in a plane perpendicular to the longitudinal axis of the device. A cone 22 is connected to the mounting ring 21 which is arranged coaxially to the cup member 12 of the drive unit interface 10 with regard to the longitudinal axis of the device. An inner surface 23 of the cone 22 provides a second transmission surface of the payload interface 20.

As can be seen from Fig. 1, the first transmission surface 13 on the outer side of the cup member 12 consists of two angular locating faces 14 which, in the first configuration, are brought into contact to the second transmission interface 23 (which is represented by the inside face 24 of the cone 22) of the cone 22. In this configuration it is possible to transfer torque from the drive unit and the drive unit interface 10, respectively, to the payload interface 20. The area of contact between the first and the second transmission interfaces 13, 23 is depicted with reference numeral 30. As can be seen from Fig. 2, in the second configuration there is a gap 31 in the area of contact 30 between the first and the second transmission interfaces 13, 23. Hence, in this second configuration, it is not possible to transfer torque from the drive unit to the payload interface 20.

Coupling and decoupling between the drive unit interface 10 and the payload interface 20 is made with help of a coupling member 40. The coupling member 40 is adapted for coupling and decoupling the drive unit interface 10 to and from the payload interface 20. Decoupling is accomplished by lifting the first transmission interface 13 from the second transmission interface as shown in Fig. 2. In this second configuration they cannot interact with each other. The second configuration is chosen during launch of the satellite payload to avoid that load, such as vibrations, is introduced from the weight of the payload to the drive unit. Furthermore, the coupling member 40 is adapted for coupling the drive unit interface 10 to the payload interface 20 by engaging the first transmission surface 13 to the second transmission surface 23 after launch to provide the first configuration.

The coupling member 40 comprises a bellows 41 that is connected via a first end 42 to the drive unit interface 10 and via a second end 43 to the payload interface 20. As can be seen from Figs. 1 and 2, the bellows 41 has a circular shape. The second end 43 of the bellows 41 is connected to the payload interface 20 via a connection part 25. The connection part 25 is a circular member which surrounds the bellows 41 and the drive unit, respectively. The bellows 41 is arranged coaxially to the cup member 12 of the drive unit interface 10 and the cone 22 of the payload interface 20 with regard to the not shown longitudinal axis of the device.

The bellows 41 which is made from metal, for example, is adapted to provide a spring force in the direction of the longitudinal axis if released by a not shown coupling mechanism to press the drive unit interface 10 against the payload interface 20, and the first transmission surface 13 to the second transmission surface 23, respectively. The bellows 41 is flexible in axial direction, i.e. in a direction of the longitudinal axis. Furthermore, it may be flexible in lateral direction and/or in bending direction. However, the bellows 41 is torsional stiff to allow torque transfer from the drive unit interface 10 to the payload interface 20.

As is clear from Figs. 1 and 2, the drive unit interface 10 is equipped with a conically shaped area (cup member 12) on one end and with an interface to the bellows 41 providing an axial spring force on the other end. As a result, the payload interface 20 is forced by the bellows 41 compression force to the drive unit interface 10. It is to be understood that the drive unit and the drive unit interface 10, respectively, is fixed to a satellite, for example, while the payload and the payload interface 20 will be moved by the spring force of the bellows 41.

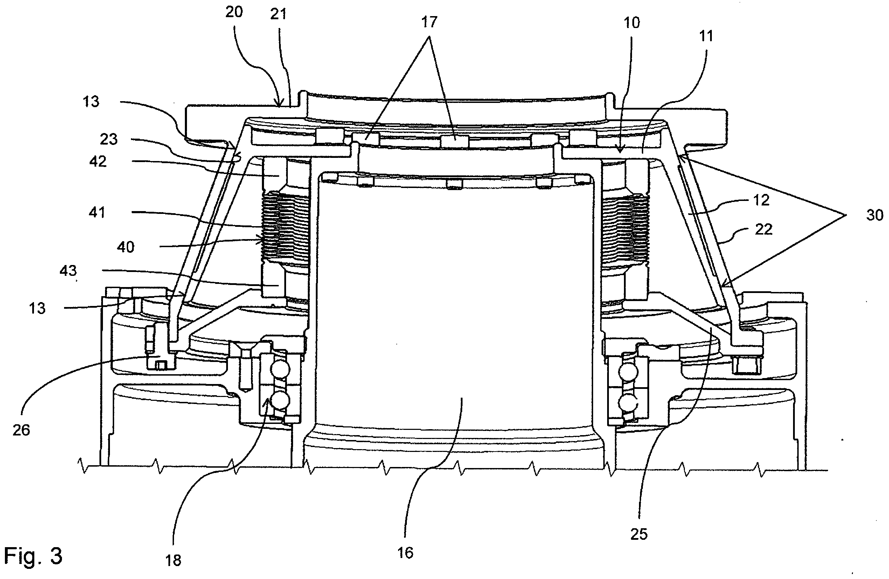

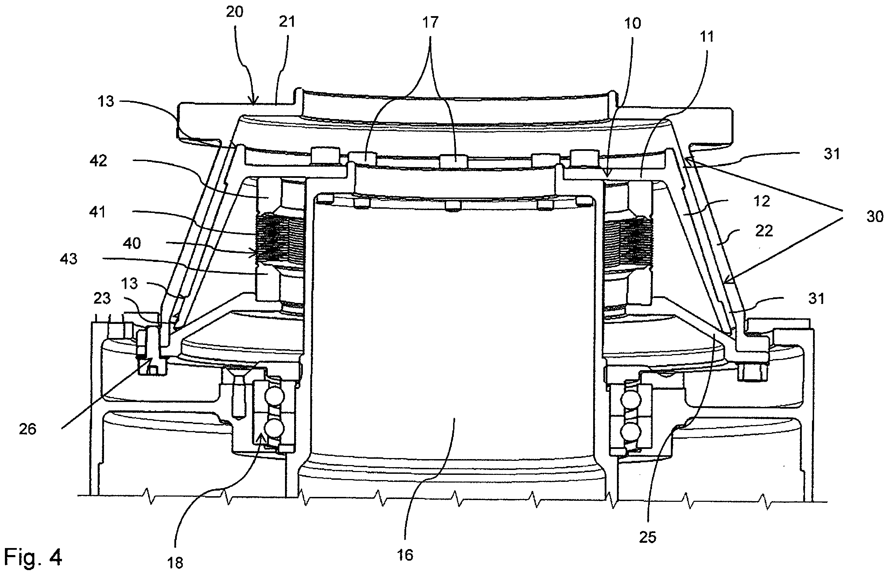

During mission, the spring force of the bellows 41 pushes the payload interface 20 and its second transmission surface 23 against the cup member 12 of the drive unit interface 10 and its first transmission interface 13. As a result, the first and the second transmission interfaces 13, 23 are engaged in the area of contact 30. In this configuration, a very accurate alignment between the drive unit rotor (shown in Figs. 3 and 4) and the payload interface 20 can be achieved while the torsional stiff bellows 41 allows a torque transfer to the payload interface 20.

During launch, the payload interface 20 is lifted off from its conical interface area (see the gap 31 in the area of contact 30 in Figs. 3 and 4) in order to achieve a decoupling of the drive unit interface 10 from the instrument/payload interface. Residual forces transferred are negligible due to the fact that the bellows 41 is flexible in axial, lateral and bending direction.

Figs. 3 and 4 show an alternative view of the device according to the invention where Fig. 3 shows the first configuration where the first and the second transmission interfaces 13, 23 are engaged with each other. In contrast, Fig. 4 shows the second configuration where in the area of contact 30 there is a gap 31 to avoid transferring torque from the drive unit interface 10 to the payload interface 20.

In addition, a rotor 16 of the drive unit is shown in Figs. 3 and 4. The rotor 16 is fixed via screws 17 to the circular member 11 of the drive unit interface 10. As can be seen from Figs. 1 and 2, the circular member 11 comprises wells 15 for connecting the rotor 16 to the drive unit interface 10. The rotor 16 is rotatable within a bearing 18. The drive unit itself, i.e. a motor, is not shown and is adapted to rotate the rotor along the longitudinal axis of the device.

As can also be seen from Figs. 3 and 4, the connection part 25 is connected via screws 26 to the cone 22. The connection part 25 has a conical shape. It is connected to the second end 43 of the bellows 41. The connection between the connection part 25 and the second end 43 of the bellows 41 may be made by screws, by welding or other mechanisms.

### LIST OF REFERENCE SIGNS

- 10: drive unit interface
- 11: circular member
- 12: cup member
- 13: first transmission interface
- 14: locating face
- 15: well for connecting a rotor of the drive unit
- 16: rotor
- 17: screw
- 18: bearing
- 20: payload interface
- 21: mounting ring
- 22: cone
- 23: second transmission interface
- 24: inside face
- 25: connection part
- 26: screw
- 30: area of contact
- 31: gap
- 40: coupling member
- 41: bellows
- 42: first end of bellows attached to the drive unit
- 43: second end of bellows attached to the payload interface

## Claims

1. A device for coupling a satellite payload to a drive unit for actuating the satellite payload in orbit, comprising:
- a drive unit interface (10) connectable to the drive unit and having a first transmission surface (13);
- a payload interface (20) connectable to the payload and having a second transmission surface (23);
- a coupling member (40) adapted for decoupling the drive unit interface (10) from the payload interface (20) by lifting the first transmission surface (13) from the second transmission surface (23) that they cannot interact with each other during launch of the satellite payload and adapted for coupling the drive unit interface (10) to the payload interface (20) by engaging the first transmission surface (13) with the second transmission surface (23) after launch,
**characterized in that**
the coupling member (40) comprises a bellows (41) that is connected to the drive unit interface (10) and the payload interface (20).

2. The device according to claim 1, wherein the drive unit interface (10) comprises a cup member (12) having a conical shape that provides the first transmission surface (13) on its outer side.

3. The device according to claim 1 or 2, wherein the payload device comprises a cone (22) being arranged coaxially to the cup member (12) of the drive unit with regard to a longitudinal axis of the device, wherein its inner surface provides the second transmission surface (23).

4. The device according to claim 1, wherein the bellows (41) has a circular shape.

5. The device according to one of claims 1 to 4, wherein the bellows (41) is arranged coaxially to the cup member (12) of the drive unit and the cone (22) of the payload interface (20) with regard to the longitudinal axis of the device.

6. The device according to one of claims 1 to 5, wherein the bellows (41) is adapted to provide a spring force in the direction of the longitudinal axis if released by the coupling member (40) for pressing the drive unit interface (10) against the payload interface (20).

7. The device according to one of claims 1 to 6, wherein the bellows (41) is flexible in axial direction and/or in lateral direction and/or in bending direction.

8. The device according to one of claims 1 to 7, wherein the bellows (41) is torsional stiff to allow torque transfer from the drive unit to the payload unit.

9. The device according to one of claims 1 to 8, wherein the bellows (41) is compressed by a decoupling member (40) during launch.

## Patentansprüche

1. Vorrichtung zum Koppeln einer Satellitennutzlast an eine Antriebseinheit zum Betätigen der Satellitennutzlast im Orbit, die umfasst:
- eine Antriebseinheitsschnittstelle (10), die mit der Antriebseinheit verbindbar ist und eine erste Transmissionsoberfläche (13) hat;
- eine Nutzlastschnittstelle (20), die mit der Nutzlast verbindbar ist und eine zweite Transmissionsoberfläche (23) hat;
- ein Kopplungselement (40), das dazu eingerichtet ist, die Antriebseinheitsschnittstelle (10) durch Anheben der ersten Transmissionsoberfläche (13) von der zweiten Transmissionsoberfläche (23) von der Nutzlastschnittstelle (20) zu entkoppeln, so dass sie während des Starts der Satellitennutzlast nicht miteinander zusammenwirken können, und das dazu eingerichtet ist, die Antriebseinheitsschnittstelle (10) durch ein Ineingriffbringen der ersten Transmissionsoberfläche (13) mit der zweiten Transmissionsoberfläche (23) nach dem Start mit der Nutzlastschnittstelle (20) zu koppeln,
**dadurch gekennzeichnet, dass**
das Kopplungselement (40) einen Balg (41) umfasst, der mit der Antriebseinheitsschnittstelle (10) und der Nutzlastschnittstelle (20) verbunden ist.

2. Vorrichtung nach Anspruch 1, wobei die Antriebseinheitsschnittstelle (10) ein Becherelement (12) mit einer konischen Form hat, das auf seiner Außenseite die erste Transmissionsoberfläche (13) bereitstellt.

3. Vorrichtung nach Anspruch 1 oder 2, wobei die Nutzlasteinrichtung einen Kegel (22) umfasst, der bezüglich einer Längsachse der Vorrichtung koaxial zu dem Becherelement (12) der Antriebseinheit angeordnet ist, wobei seine Innenfläche die zweite Transmissionsoberfläche (23) bereitstellt.

4. Vorrichtung nach Anspruch 1, wobei der Balg (41) eine Kreisform hat.

5. Vorrichtung nach einem der Ansprüche 1 bis 4, wobei der Balg (41) bezüglich der Längsachse der Einrichtung koaxial zu dem Becherelement (12) der Antriebseinheit und dem Kegel (42) der Nutzlastschnittstelle (20) angeordnet ist.

6. Vorrichtung nach einem der Ansprüche 1 bis 5, wobei der Balg (41) dazu eingerichtet ist, eine Federkraft in der Richtung der Längsachse bereitzustellen, wenn er von dem Kopplungselement (40) gelöst wird, um die Antriebseinheitsschnittstelle (10) gegen die Nutzlastschnittstelle (20) zu drücken.

7. Vorrichtung nach einem der Ansprüche 1 bis 6, wobei der Balg (41) in einer axialen Richtung und/oder in einer seitlichen Richtung und/oder in einer Biegerichtung flexibel ist.

8. Vorrichtung nach einem der Ansprüche 1 bis 7, wobei der Balg (41) torsionssteif ist, um eine Drehmomentübertragung von der Antriebseinheit auf die Nutzlasteinheit zu ermöglichen.

9. Vorrichtung nach einem der Ansprüche 1 bis 8, wobei der Balg (41) während des Starts durch ein Entkopplungselement (40) komprimiert wird.

## Revendications

1. Dispositif pour coupler une charge utile de satellite à une unité de pilotage pour actionner la charge utile de satellite en orbite, comprenant :
- une interface (10) d'unité de pilotage connectable à l'unité de pilotage et ayant une première surface de transmission (13) ;
- une interface (20) de charge utile connectable à la charge utile et ayant une deuxième surface de transmission (23) ;
- un élément de couplage (40) adapté à découpler l'interface (10) d'unité de pilotage de l'interface (20) de charge utile en soulevant la première surface de transmission (13) par rapport à la deuxième surface de transmission (23) afin qu'elles ne puissent interagir l'une avec l'autre lors du lancement de la charge utile de satellite et adapté à coupler l'interface (10) d'unité de pilotage à l'interface (20) de charge utile en engageant la première surface de transmission (13) avec la deuxième surface de transmission (23) après le lancement,
**caractérisé en ce que**
l'élément de couplage (40) comprend un soufflet (41) qui est connecté à l'interface (10) d'unité de pilotage et l'interface (20) de charge utile.

2. Dispositif selon la revendication 1, dans lequel l'interface (10) d'unité de pilotage comprend un élément en coupelle (12) ayant une forme conique qui fournit la première surface de transmission (13) sur son côté extérieur.

3. Dispositif selon la revendication 1 ou 2, dans lequel le dispositif de charge utile comprend un cône (22) étant agencé coaxialement avec l'élément en coupelle (12) de l'unité de pilotage par rapport à un axe longitudinal du dispositif, dans lequel sa surface intérieure fournit la deuxième surface de transmission (23).

4. Dispositif selon la revendication 1, dans lequel le soufflet (41) a une forme circulaire.

5. Dispositif selon l'une quelconque des revendications 1 à 4, dans lequel le soufflet (41) est agencé coaxialement avec l'élément en coupelle (12) de l'unité de pilotage et le cône (22) de l'interface (20) de charge utile par rapport à l'axe longitudinal du dispositif.

6. Dispositif selon l'une quelconque des revendications 1 à 5, dans lequel le soufflet (41) est adapté à fournir une force de ressort dans le sens de l'axe longitudinal s'il est libéré par l'élément de couplage (40) pour presser l'interface (10) d'unité de pilotage contre l'interface (20) de charge utile.

7. Dispositif selon l'une quelconque des revendications 1 à 6, dans lequel le soufflet (41) est flexible dans un sens axial et/ou dans un sens latéral et/ou dans un sens de flexion.

8. Dispositif selon l'une quelconque des revendications 1 à 7, dans lequel le soufflet (41) est rigide en torsion pour permettre un transfert de couple de l'unité de pilotage à l'unité de charge utile.

9. Dispositif selon l'une quelconque des revendications 1 à 8, dans lequel le soufflet (41) est comprimé par un élément de découplage (40) lors du lancement.
